# EUROPÄISCHE PATENTANMELDUNG

(11) **EP 4 424 216 A1**
(43) Veröffentlichungstag der Anmeldung: **04.09.2024**
(21) Anmeldenummer: 23158943.3
(22) Anmeldetag: 28.02.2023
(51) Int. Cl.: A47J 27/00, A47J 37/06, A47J 43/28

(54) **RACLETTE-TISCHGRILL MIT EINEM PFÄNNCHEN UND EINEM SPACHTEL**

(71) Anmelder: A. & J. Stöckli AG, 8754 Netstal (CH)
(72) Erfinder: Rüsch, Marcel, 8497 Fischenthal (CH); Bavaud, Chantal, 5000 Aarau (CH)
(74) Vertreter: E. Blum & Co. AG

(57) **Zusammenfassung**

Die Erfindung betrifft ein Raclette-Tischgrill-Set. Es umfasst einen Tischgrill (10), ein Raclettepfännchen (20) mit einem Griffteil (24) und einen Spachtel (30) zum Abschaben von Käse aus dem Raclettepfännchen (20). Der Spachtel (30) umfasst ein Halteteil (32) und ein Trageteil (33), wobei die Hauptfläche des Halteteils (32) und die Hauptfläche des Trageteils (33) zueinander in einem Winkel von mindestens 5° und maximal 90° stehen. Das Raclettepfännchen (20) umfasst ein Pfännchengefäss (21) zur Aufnahme des Raclettes und das Griffteil (24) mit zwei Armen (25). Die Kombination eines solchen Raclettepfännchens (20) und eines solchen Spachtels (30) erlaubt ein komfortables Bewegen von Lebensmitteln im Raclettepfännchen (20).

## Beschreibung

### Gebiet der Erfindung

Die Erfindung betrifft ein Raclette-Tischgrill-Set. Dieses umfasst einen Tischgrill, ein Raclettepfännchen mit einem Griff und einen Spachtel zum Ausschaben von Käse aus dem Raclettepfännchen.

### Hintergrund

Raclette-Tischgrills sind bekannt. Sie umfassen ein Sockelteil, an dessen Oberseite eine Abstellfläche vorhanden ist, auf welcher mit Käse gefüllte Raclettepfännchen abgestellt werden können. Oberhalb der Abstellfläche befindet sich in einem gewissen Abstand ein Heizkörper, welcher die Raclettepfännchen bzw. den Käse wärmt. Der Käse wird im Raclettepfännchen geschmolzen und kann, sobald er genügend flüssig ist, mit einem Spachtel aus dem Raclettepfännchen geschabt werden.

Raclette-Tischgrills werden auch regelmässig genutzt, um kleine Pizzen am Tisch zu backen. Eine kleine Teigfläche wird in die Raclettepfännchen gelegt und anschliessend beispielsweise mit Tomatensauce, Mozzarella und/oder anderen Zutaten ergänzt. Der Spachtel kann verwendet werden, um die Pizzen aus dem Raclettepfännchen zu schieben.

### Darstellung der Erfindung

Es stellt sich die Aufgabe, ein Raclette-Tischgrill-Set bereitzustellen, welches ein vielseitig einsetzbares Raclettepfännchen und einen vielseitig einsetzbaren Spachtel umfasst.

Diese Aufgabe wird durch die unabhängigen Ansprüche 1 und 10 gelöst. Demnach umfasst ein Raclette-Tischgrill-Set
- einen Tischgrill. Ein Tischgrill ist kompakt ausgestaltet, sodass es zum Grillen auf dem Tisch von Lebensmitteln wie Käse, Fleisch oder Gemüse verwendet werden kann. Insbesondere handelt es sich um einen Elektrogrill. Insbesondere weist der Tischgrill eine maximale Höhe von 50 cm auf.
- ein Raclettepfännchen mit einem Griffteil. Das Raclettepfännchen ist separat zum Tischgrill. Es kann in den Tischgrill eingelegt werden, um im Raclettepfännchen angeordnete Lebensmittel zu garen bzw. zu schmelzen, und aus dem Tischgrill wieder herausgenommen werden. Das Raclettepfännchen ist geeignet, Raclettekäse aufzunehmen. Ebenso ist es geeignet, andere Lebensmittel wie beispielsweise Pizzateig und Zutaten aufzunehmen. Insbesondere weist das Raclettepfännchen eine maximale Erstreckung von 40 cm, insbesondere 30 cm, auf. Insbesondere beträgt die Fläche zur Aufnahme von Lebensmitteln maximal 300 cm², insbesondere maximal 200 cm², insbesondere maximal 100 cm².
- einen Spachtel zum Ausschaben von Käse aus dem Raclettepfännchen. Ein Spachtel erlaubt es, den Käse in besonders einfacher Weise aus dem Raclettepfännchen zu schaben. Der Käse soll dabei möglichst vollständig bzw. rückstandsfrei aus dem Raclettepfännchen geschabt werden können.

Der Spachtel weist ein Halteteil und ein Trageteil auf. Die Hauptfläche des Halteteils und die Hauptfläche des Trageteils sind zueinander in einem Winkel von mindestens 5° und maximal 90°, insbesondere von mindestens 30° und maximal 60°, ausgerichtet. Der Begriff "Hauptfläche" dient der Definition der gegenseitigen Lage von Halteteil und Trageteil. Sie entspricht der grössten Fläche des jeweiligen Teils. Zur Bestimmung des Winkels wird eines der beiden Teile mit seiner Hauptfläche in die Horizontalebene gelegt. Dann ist die Hauptfläche des anderen Teils zur Horizontalebene geneigt, also eine "Schiefe Ebene", wobei dann der Neigungswinkel der "Schiefen Ebene" zu bestimmen ist.

Insbesondere sind das Halteteil und das Trageteil flache Teile, dies bedeutet insbesondere, dass die Länge mindestens fünfmal, insbesondere mindestens zehnmal, grösser ist als die Dicke des entsprechenden Teils.

Eine Biegung im Spachtel hat den Vorteil, dass beim Liegen des Spachtels auf dem Tisch, nie der ganze Spachtel bündig auf dem Tisch liegt, sondern zumindest ein Teil des Spachtels teilweise von der Tischfläche abgehoben ist. Dadurch lässt sich der Spachtel besser greifen, wenn er vom Tisch angehoben werden soll.

Vorteilhaft entspricht die Länge des Halteteils mindestens 80% und maximal 200%, insbesondere mindestens 110% und maximal 150%, der Länge des Trageteils. Dies bedeutet, dass sowohl Halteteil als auch Trageteil einen wesentlichen Teil der Gesamtlänge des Spachtels ausmachen. Hat auch das Trageteil eine gewisse Länge, ist es nicht nur gut geeignet, Käse aus dem Raclettepfännchen auszuschaben, sondern auch, festere Lebensmittel, wie eine kleine Pizza, aus dem Raclettepfännchen auszuheben oder zu drehen, ähnlich wie bei einem Pfannenwender.

Insbesondere weist das Trageteil jeweils eine Länge und eine Breite von mindestens 4 cm, insbesondere von mindestens 3 cm, auf. Damit erfüllt der Spachtel die Funktion eines Pfannenwenders umso mehr, da sich mit einem entsprechend grossen Halteteil eine kleine Pizza besonders einfach anheben lässt.

Mit Vorteil weist das Halteteil und/oder das Trageteil eine umrahmte Öffnung auf. "Umrahmt" bedeutet, dass es sich um ein Loch beliebiger Form handelt, welches vollständig von Material umgeben ist und nicht einer Einbuchtung am Rande des Halteteils und/oder des Trageteils entspricht. Insbesondere erstreckt sich die Öffnung über mindestens 30%, insbesondere über mindestens 50%, der gesamten Länge des Spachtels. Eine solche Öffnung hat den Vorteil, dass die Haftfläche zwischen dem Spachtel und dem anzuhebenden Lebensmittel kleiner ist, d.h. sich das Lebensmittel vom Spachtel leichter lösen lässt. Im Übrigen kann Material gespart werden, sodass der Spachtel kostengünstiger herzustellen ist.

Mit Vorteil weist das Halteteil zwei Arme auf, welche am einen Ende an das Trageteil grenzen und am anderen Ende zu einer gemeinsamen Zunge zusammenlaufen, insbesondere wobei das Halteteil V-förmig ausgestaltet ist. Eine derartige Ausgestaltung macht das Halteteil besonders förmig, um es in der Hand zu halten. Zudem trägt die beschriebene Ausgestaltung dazu bei, dass der Spachtel besser gefedert ist. Insbesondere weisen die Arme eine rechteckförmige Querschnittsform auf.

Vorteilhaft ist der Spachtel derart ausgestaltet, dass er sowohl mit dem Halteteil, als auch mit dem Trageteil flach auf einer horizontalen, flachen Ebene liegend im Gleichgewicht anordenbar ist. "Im Gleichgewicht" bedeutet, dass der Spachtel in einer Ruheposition liegt und eine externe Kraft auf den Spachtel einwirken muss, z.B. das Umstossen durch eine Person, damit er sich aus der jeweiligen Gleichgewichtsposition bewegt. D.h. der Spachtel kann derart auf einem Tisch positioniert werden, dass das Halteteil flach auf dem Tisch liegt und das Trageteil angehoben ist. Ein nach dem Ausschaben des Raclettepfännchens hängengebliebener Käse befindet sich somit in der Luft und berührt den Tisch nicht. Andererseits kann der Spachtel derart auf einem Tisch positioniert werden, dass das Trageteil flach auf dem Tisch liegt und das Halteteil angehoben ist. Dadurch lässt sich der Spachtel besonders einfach greifen, wenn er vom Tisch angehoben werden soll.

Insbesondere ist der Spachtel auf seinen beiden schmalen, kantenförmigen Seitenflächen im Gleichgewichten anordenbar.

Mit Vorteil ist der Spachtel einstückig und aus einem einzigen Material hergestellt. Insbesondere handelt es sich um ein Spritzgussteil oder um ein gebogenes Metallteil.

In einer besonderen Ausführungsform umfasst das Raclettepfännchen ein Pfännchengefäss zur Aufnahme des Raclettes und ein Griffteil mit zwei Armen. Ein Griffteil mit zwei Armen hat den Vorteil, dass das Pfännchengefäss stabiler in der horizontalen Ebene gehalten werden kann, verglichen mit einem Raclettepfännchen mit einem einarmigen Griffteil. Dies reduziert das Risiko, dass der Benutzer das Raclettepfännchen in seiner Hand haltend verdreht und der Käse auf den Tisch fällt.

Insbesondere weist das Pfännchengefäss eine randseitige Erhebung auf, welche einen Abstellboden umgibt und die randseitige Erhebung die maximale Erhebung des Trageteils ist.

Insbesondere umfasst das Griffteil des Raclettpfännchens eine umrahmte Öffnung. "Umrahmt" bedeutet auch hier, dass es sich um ein Loch beliebiger Form handelt, welches vollständig von Material umgeben ist und nicht einer Einbuchtung am Rande des Griffteils entspricht. Insbesondere erstreckt sich die Öffnung über mindestens 30%, insbesondere über mindestens 50%, der Gesamtlänge des Griffteils. Eine solche Öffnung hat den Vorteil, dass das Raclettepfännchen mit einer höheren Federwirkung in der Hand gehalten werden kann. Zudem reduziert eine solche Öffnung die Profilfläche, über welche Wärmeenergie vom Pfännchengefäss zur Hand des Benutzers gelangen kann. Die Verbrennungsgefahr sinkt.

Insbesondere grenzen die zwei Arme am einen Ende an das Pfännchengefäss und laufen am anderen Ende zu einer gemeinsamen Zunge zusammen, wobei der Benutzer das Raclettepfännchen an der Zunge besonders gut halten kann. Insbesondere ist das Griffteil V-förmig ausgestaltet.

Insbesondere ist die Zunge aus einem Material ausgestaltet, welches eine geringere Wärmeleitfähigkeit aufweist, als das übrige Material des Griffteils. Damit ist die Zunge thermisch gut isoliert, sodass sich ein Benutzer beim Greifen des Griffteils möglichst nicht verbrennen kann.

Mit Vorteil ist das Griffteil flach und steht in einem Winkel von mindestens 5°, insbesondere mindestens 8°, zu einem Abstellboden des Pfännchengefässes. Dadurch lässt dich das Raclettepfännchen besonders komfortabel von einem Tisch anheben.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Tischgrill, in welchen Raclettepfännchen eingeschoben und die im Raclettepfännchen angeordneten Lebensmittel gegart bzw. geschmolzen werden können;
Fig. 2a ein Raclettepfännchen in 3D-Ansicht;
Fig. 2b das Raclettepfännchen in Seitenansicht;
Fig. 3a, 4a, 5a, 6a einen Spachtel in 3D-Ansicht in vier verschiedenen Positionen im Gleichgewicht auf einer ebenen Fläche liegend;
Fig. 3b, 4b, 5c, 6b den Spachtel in den jeweiligen Positionen in Seitenansicht;
Fig. 7a und 7b das Raclettepfännchen mit dem Spachtel, wobei mit dem Spachtel Käse aus dem Raclettepfännchen ausgeschabt wird; und
Fig. 8a und 8b das Raclettepfännchen mit dem Spachtel, wobei mit dem Spachtel eine kleine Pizza aus dem Raclettepfännchen gehoben oder gedreht wird.

### Weg zur Ausführung der Erfindung

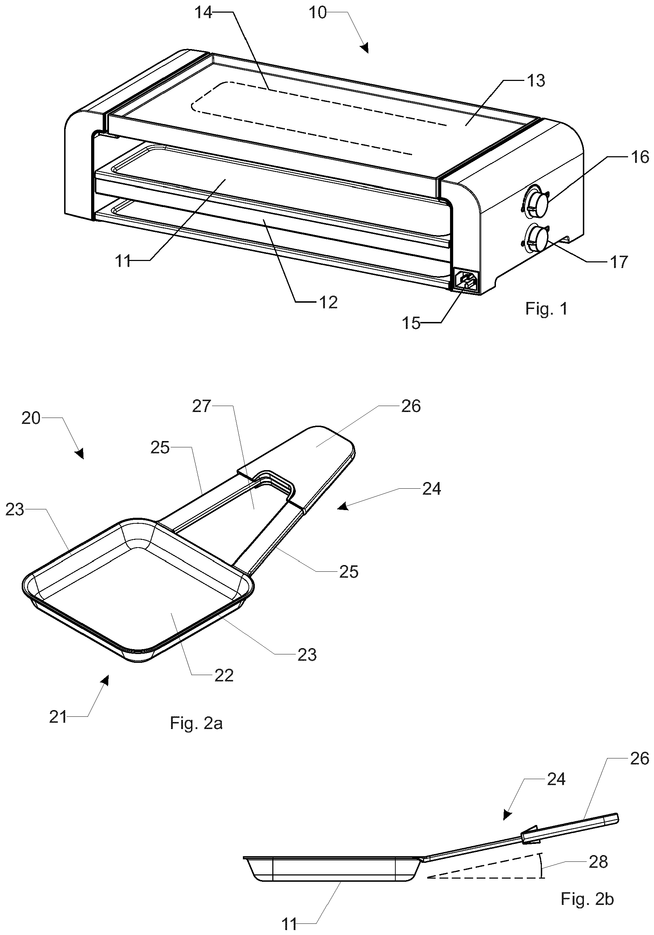

Die Fig. 1 zeigt einen Tischgrill 10, welcher geeignet ist, auf einem Tisch aufgestellt zu werden. Es hat eine Länge von 53 cm, eine Breite von 23 cm und eine Höhe von 13 cm. Er umfasst eine Abstellfläche 11, auf welcher mit Käse gefüllte Raclettepfännchen 20 abgestellt werden können. Unterhalb der Abstellfläche 11 befindet sich ein Unterhitzeheizkörper 12 zur Erwärmung der Abstellfläche 11. Oberhalb der Abstellfläche 11 befindet sich in einem gewissen Abstand eine Grillplatte 13, an deren Unterseite ein Heizkörper 14 angeordnet ist. Der Heizkörper 14 ist in Fig. 1 mittels einer gestrichelten Linie angedeutet. Er wärmt einerseits die auf der Abstellfläche 11 angeordneten Raclettepfännchen 20 bzw. die in den Raclettepfännchen 20 gehaltenen Lebensmittel, andererseits aber auch die Grillplatte 13 gegen oben. D.h. die auf der Abstellfläche 11 bzw. in den Raclettepfännchen 20 angeordneten Lebensmittel werden mit Oberhitze, und die auf der Grillplatte 13 angeordneten Lebensmittel mit Unterhitze gegart.

Der Tischgrill 10 umfasst zudem einen Stromanschluss 15, ein erstes Drehrad 16, um die Leistung der Heizvorrichtung 14 zu steuern, und ein zweites Drehrad 17 mit Schalterfunktion, um den Unterhitzeheizkörper 12 ein- und auszuschalten..

Der Tischgrill 10 ist Bestandteil eines Raclette-Tischgrill-Sets, welches auch das Raclettepfännchen 20 und einen Spachtel 30 umfasst.

Das Raclettepfännchen 20 umfasst ein Pfännchengefäss 21, in welchem der zu schmelzende Käse oder andere zu garende Lebensmittel angeordnet werden können. Das Pfännchengefäss 21 umfasst einen Abstellboden 22 und eine den Abstellboden 22 randseitig umgebende Erhebung 23. Das Pfännchengefäss 21 ist üblicherweise derart dimensioniert, dass eine Scheibe Käse darin Platz findet.

Zudem umfasst das Raclettepfännchen 20 ein Griffteil 24. Das Griffteil 24 weist zwei Arme 25 und eine Zunge 26 auf, zu welcher die zwei Arme 25 zusammenlaufen. Die zwei Arme 25 grenzen auf der einen Seite an das Pfännchengefäss 21 bzw. an dessen randseitig umgebende Erhebung 23 und auf der anderen Seite an die Zunge 26. Im Weiteren umfasst das Griffteil 24 eine umrahmte Öffnung 27. "Umrahmt" bedeutet, dass die Öffnung 27 vollständig von anderen Bauteilen umgeben ist, nämlich von der Zunge 26, den zwei Armen 25 und der Erhebung 23.

Das gesamte Griffteil 24 bildet eine V-Form. Es lässt sich an der Zunge 26 komfortabel greifen, kann durch einen Benutzer aber stabil in der Horizontalen gehalten werden, weil die beiden Arme 25 das Griffteil 24 aufspreizen und zueinander beabstandet am Pfännchengefäss 21 montiert sind.

Die Zunge 26 besteht aus einem Material, beispielsweise einem Kunststoff, welches eine tiefere Wärmeleitfähigkeit aufweist, als das Material der beiden Arme 25. Aus diesem Grund wärmt sich die Zunge 26 nicht zu stark auf und kann vom Benutzer ohne Probleme gegriffen werden.

Das Griffteil 24 ist ein flaches Bauteil, wie es in Fig. 2b gut zu sehen ist. Es ist im Verhältnis zum Abstellboden 22 des Pfännchengefässes 21 um einen Winkel 28 von 12° geneigt. Dies hat zur Folge, dass die Zunge 26 vom Tisch beabstandet ist und vom Benutzer gut gegriffen werden kann.

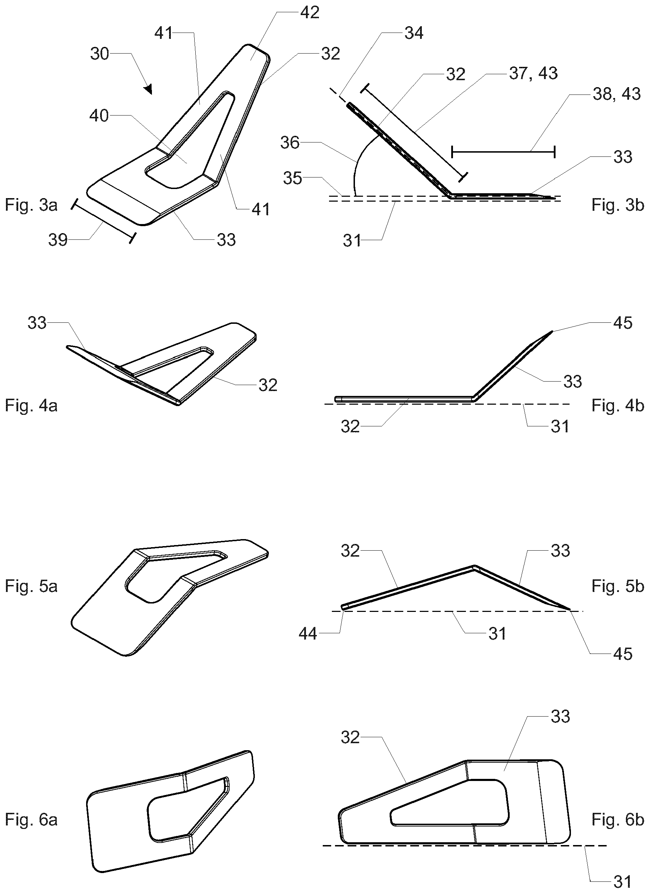

Die Fig. 3a, 4a, 5a und 6a zeigen den Spachtel 30 in 3D-Ansicht. Der Spachtel 30 ist auf den vier Figuren in vier unterschiedlichen Positionen auf einem ebenen Untergrund, hier auf einem Tisch 31 (gestrichelte Linie), im Gleichgewicht, d.h. in einer Ruhestellung, angeordnet. Die Fig. 3b, 4b, 5b und 6b zeigen den Spachtel 30 in jeweiliger Seitenansicht.

Der Spachtel 30 umfasst ein Halteteil 32 und ein Trageteil 33. Beide Teile 32 und 33 umfassen eine Hauptfläche, welche der grössten flächigen Erstreckung der beiden Teile entspricht. Die Hauptfläche 35 des Trageteils 33 liegt in der Position gemäss der Fig. 3a und 3b in der Horizontalebene. Die Hauptfläche 34 des Halteteils 32 ist zur Hauptebene 35 des Trageteils 33 bzw. zur Horizontalebene geneigt, d.h. die Hauptfläche 34 des Halteteils 32 bildet eine "Schiefe Ebene" zur Horizontalebene. Die Hauptfläche 34 des Halteteils 32 und die Hauptfläche 35 des Trageteils 33 stehen zueinander in einem Winkel 36 von 42°.

Entlang der Gesamtlänge 43 des Spachtels 30 weist das Halteteil 32 eine Länge 37 und das Trageteil 33 eine Länge 38 auf. Die Länge 37 des Halteteils 32 entspricht 130% der Länge 38 des Trageteils. D.h. sowohl das Halteteil 32 als auch das Trageteil 33 sind ein wesentlicher Teil der Gesamtlänge 43 (entspricht der Summe der Längen 37 und 38) des Spachtels 30. Keine der beiden Längen 37 und 38 ist um ein Vielfaches kleiner oder grösser wie die andere Länge. Die Länge 38 des Trageteils 33 beträgt ca. 6 cm und die Breite 39 des Trageteils 33 beträgt ca. 5 cm.

Das Trageteil 33 und das Halteteil 32 weisen eine umrahmte Öffnung 40 auf. Das Halteteil 32 ist V-förmig ausgestaltet, weist zwei Arme 41 und eine Zunge 42 auf, wobei die zwei Arme 41 zur Zunge 42 zusammenlaufen. Der Spachtel 30 ist aus einem einzigen Material, insbesondere aus einem Kunststoff, einstückig und als Spritzgussteil ausgebildet.

In der Position gemäss den Fig. 3a und 3b liegt der Spachtel 30 mit dem Trageteil 33 flach auf einer horizontalen, flachen Ebene, nämlich auf dem Tisch 31. Der Spachtel 30 liegt in dieser Position stabil im Gleichgewicht, d.h. er liegt ruhig und fällt nicht ohne äussere Krafteinwirkung aus dieser Position in eine andere Position. Liegt der Spachtel 30 in dieser Position auf dem Tisch, kann komfortabel das Halteteil 32 ergriffen und der Spachtel 30 angehoben werden.

Die Fig. 4a und 4b zeigen den Spachtel 30 in einer anderen Gleichgewichtsposition. Er liegt mit seinem Halteteil 32 flach auf einer horizontalen, flachen Ebene, nämlich auf dem Tisch 31. Auch in dieser Position liegt der Spachtel 30 stabil im Gleichgewicht und fällt nicht in eine andere Position ohne eine externe Krafteinwirkung. Der Spachtel 30 wird bevorzugt in dieser Position auf dem Tisch 31 angeordnet, nachdem Käse aus dem Raclettepfännchen ausgeschabt wurde und noch Käsereste am äusseren Ende 45 des Trageteils 33 zurückgeblieben sind. In diesem Fall berühren die Käsereste den Tisch 31 nicht und verschmutzen diesen auch nicht.

Die Fig. 5a und 5b zeigen den Spachtel 30 einer weiteren Gleichgewichtsposition. Der Spachtel 30 liegt mit dem äusseren Ende 45 des Trageteils 33 und dem äusseren Ende 44 des Halteteils 32 auf dem Tisch 31.

Die Fig. 6a und 6b zeigen den Spachtel 30 in einer vierten Gleichgewichtsposition. Der Spachtel 30 liegt mit seinen beiden schmalen, kantenförmigen Seitenflächen im Gleichgewicht auf dem Tisch 31.

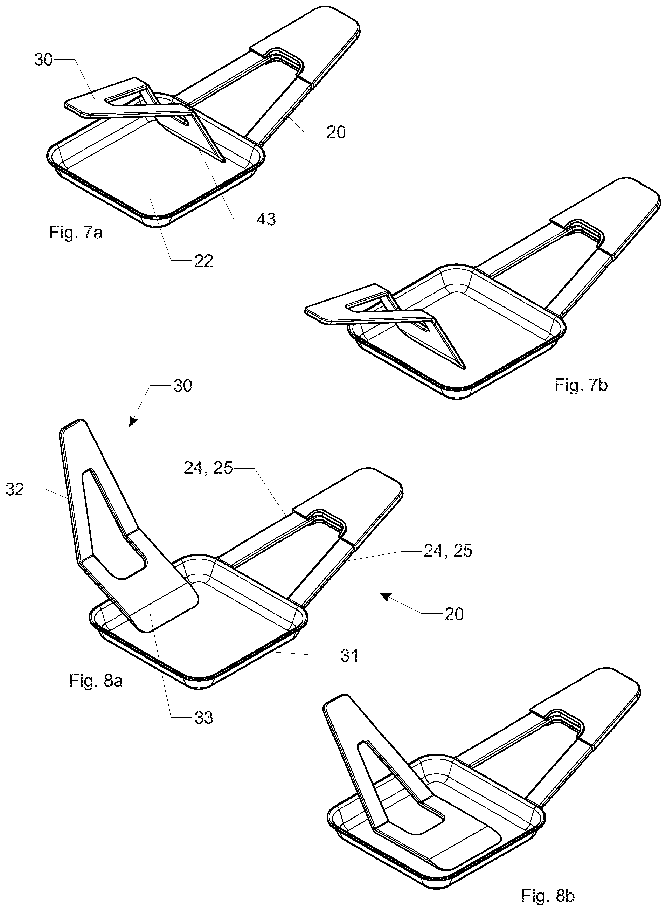

Die Fig. 7a, 7b, 8a und 8b zeigen nun das Raclettepfännchen 20 und den Spachtel 30 bei gemeinsamer Verwendung. In den Fig. 7a und 7b wird Käse (der Käse ist nicht sichtbar) aus dem Raclettepfännchen 20 ausgeschabt. Aus diesem Grund wird das äussere Ende 45 des Trageteils 33 dem Abstellboden 22 entlang geschabt. Die Fig. 7a zeigt die Anfangsposition und die Fig. 7b zeigt eine Position des Schabens, bei welcher bereits der grösste Teil des Käses aus dem Raclettepfännchen 20 ausgeschabt wurde.

In den Fig. 8a und 8b wird eine kleine Pizza (die Pizza ist nicht gezeigt) aus dem Raclettepfännchen 20 angehoben. Hierfür wird, wie in Fig. 8a gezeigt, das Trageteil 33 des Spachtels 30 unter die Pizza geführt. Ist das Trageteil 33 in der Position gemäss Fig. 8b angelangt, kann die Pizza aus dem Raclettepfännchen 30 angehoben oder gedreht werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Raclette-Tischgrill-Set, umfassend
- einen Tischgrill (10),
- ein Raclettepfännchen (20) mit einem Griffteil (24),
- einen Spachtel (30) zum Ausschaben von Käse aus dem Raclettepfännchen (20),
**dadurch gekennzeichnet, dass** der Spachtel (30) ein Halteteil (32) und ein Trageteil (33) aufweist, wobei die Hauptfläche (34) des Halteteils (32) und die Hauptfläche (35) des Trageteils (33) zueinander in einem Winkel (36) von mindestens 5° und maximal 90° stehen.

2. Raclette-Tischgrill-Set nach Anspruch 1, wobei die Hauptfläche (34) des Halteteils (32) und die Hauptfläche (35) des Trageteils (33) zueinander in einem Winkel (36) von mindestens 30° und maximal 60° stehen.

3. Raclette-Tischgrill-Set nach einem der vorangehenden Ansprüche, wobei die Länge (37) des Halteteils (32) mindestens 80% und maximal 200%, insbesondere mindestens 110% und maximal 150%, der Länge (38) des Trageteils (33) entspricht.

4. Raclette-Tischgrill-Set nach einem der vorangehenden Ansprüche, wobei das Trageteil (33) jeweils eine Länge (38) und eine Breite (39) von mindestens 3 cm, insbesondere von mindestens 4 cm, aufweist.

5. Raclette-Tischgrill-Set nach einem der vorangehenden Ansprüche, wobei das Halteteil (32) und/oder das Trageteil (33) eine umrahmte Öffnung (40) aufweisen,
insbesondere wobei sich die umrahmte Öffnung (40) über mindestens 30%, insbesondere mindestens 50%, der Gesamtlänge (43) des Spachtels (30) erstreckt.

6. Raclette-Tischgrill-Set nach einem der vorangehenden Ansprüche, wobei das Halteteil (32) zwei Arme (41) aufweist, welche am einen Ende an das Trageteil (33) grenzen und am anderen Ende zu einer gemeinsamen Zunge (42) zusammenlaufen,
insbesondere wobei das Halteteil (32) V-förmig ausgestaltet ist.

7. Raclette-Tischgrill-Set nach einem der vorangehenden Ansprüche, wobei der Spachtel (30) derart ausgestaltet ist, dass der Spachtel (30) sowohl mit dem Halteteil (32), als auch mit dem Trageteil (33) flach auf einer horizontalen, flachen Ebene (31) liegend im Gleichgewicht anordenbar ist.

8. Raclette-Tischgrill-Set nach einem der vorangehenden Ansprüche, wobei der Spachtel (30) auf seinen beiden schmalen, kantenförmigen Seitenflächen im Gleichgewicht anordenbar ist.

9. Raclette-Tischgrill-Set nach einem der vorangehenden Ansprüche, wobei der Spachtel (30) einstückig und aus einem einzigen Material hergestellt ist.

10. Raclette-Tischgrill-Set, insbesondere nach einem der vorangehenden Ansprüche, umfassend
- einen Tischgrill (10),
- ein Raclettepfännchen (20) mit einem Griffteil (24),
- einen Spachtel (30) zum Abschaben von Käse aus dem Raclettepfännchen (20),
**dadurch gekennzeichnet, dass** das Raclettepfännchen (20) ein Pfännchengefäss (21) zur Aufnahme des Raclettes und das Griffteil (24) zwei Arme (25) aufweist.

11. Raclette-Tischgrill-Set nach Anspruch 10, wobei das Griffteil (24) eine umrahmte Öffnung (27) aufweist.

12. Raclette-Tischgrill-Set nach einem der Ansprüche 10 oder 11, wobei die zwei Arme (25) am einen Ende an das Pfännchengefäss (21) grenzen und am anderen Ende zu einer gemeinsamen Zunge (26) zusammenlaufen,
insbesondere wobei das Griffteil (24) V-förmig ausgestaltet ist.

13. Raclette-Tischgrill-Set nach Anspruch 12, wobei die Zunge (26) aus einem Material ausgestaltet ist, welches eine geringere Wärmeleitfähigkeit aufweist, als das übrige Material des Griffteils (24).

14. Raclette-Tischgrill-Set nach einem der Ansprüche 10 bis 13, wobei das Griffteil (24) flach ist und in einem Winkel (28) von mindestens 5°, insbesondere mindestens 8°, zu einem Abstellboden (22) des Pfännchengefässes (21) steht.
